# EUROPÄISCHE PATENTSCHRIFT

(11) **EP 2 832 480 B1**
(45) Veröffentlichungstag und Bekanntmachung des Hinweises auf die Patenterteilung: **21.08.2024**
(21) Anmeldenummer: 14176961.2
(22) Anmeldetag: 14.07.2014
(51) Int. Cl.: B23B 51/00, E21B 10/58

(54) **Bohrer**
Drill bit
Foret

(30) Priorität: 31.07.2013 DE 102013108233
(43) Veröffentlichungstag der Anmeldung: 04.02.2015
(73) Patentinhaber: DreBo Werkzeugfabrik GmbH, D-88361 Altshausen (DE)
(72) Erfinder: Sutej, Oliver, 88356 Ostrach (DE)
(74) Vertreter: Baldus, Oliver

(56) Entgegenhaltungen:
- EP-A1- 1 865 144
- DE-B- 1 021 305
- GB-A- 707 021
- LU-A1- 85 697

## Beschreibung

Die Erfindung betrifft einen Bohrer, gemäß dem Oberbegriff von Anspruch 1.

Bohrer, wenn sie als Gesteinsbohrer ausgebildet sind, werden typischerweise mit Schneidkörpern hergestellt, die aus Hartmetall bestehen und in einer Körperaufnahme an oder in dem Bohrerkopf aufgenommen sind. Die Aufnahme erfolgt, indem der Hartmetallkörper in der Körperaufnahme eingelötet wird, und so sicher befestigt ist.

Derartige Gesteinsbohrer sind seit Jahrzehnten üblich und haben sich bewährt, gerade bei kleinen Bohrerdurchmessern.

Bei Durchmessern von Zweischneid-Bohrern ab etwa 10mm ist typischerweise die Hartmetallplatte in einer Körperaufnahme aufgenommen, die ein gewisses Übermaß aufweist, um das Lot aufnehmen zu können. Die Fixierung erfolgt dann durch Kerben der schlitzförmigen Körperaufnahme. Hierdurch wird ein Materialaufwurf erzeugt, der den Schneidkörper festklemmt.

Wenn das Kerben manuell erfolgt, ist das Ausmaß des Aufwurfs von dem Bediener abhängig, so dass je von Bohrer zu Bohrer unterschiedliche Klemmkräfte bestehen. Diese sind manchmal sehr groß, was zu unnötigen Spannungen im Bohrerkopf führt, manchmal auch zu klein, so dass sie Klemmkraft nicht ausreicht.

Um zu vermeiden, dass durch einen ungünstigen Aufwurf eine Asymmetrie des Bohrers erzeugt wird, ist es auch bereits vorgeschlagen worden, eine Hartmetallplatte mit einem Zapfen oder einer Hinterschneidung zu realisieren, mit dem Ziel, einen Formschluss gegenüber der Körperaufnahme zu erzeugen. Eine derartige Hinterschneidung ist jedoch herstellungstechnisch weder bei der Hartmetallplatte noch bei der Körperaufnahme besonders günstig, so dass sie sich nicht durchgesetzt hat.

Als Beispiel für eine derartige Lösung wird auf die GB 707 021 A verwiesen.

Die Druckschrift DE 1 021 305 B betrifft einen Bohrkopf für Gesteinsbohrer nach dem Oberbegriff des Anspruchs 1 mit einem Schneidenkörper aus Hartmetall, der in einer Nut im Bohrkopf eingelötet ist, welche den Bohrkopf radial zur Bohrerachse durchsetzt.

Die Druckschrift LU 85697 A1 betrifft ein Verfahren zur Herstellung eines Bohrmeißels, bei dem in der Spitze des Meißels eine diametrale Kerbe angebracht wird, die zwei parallele innere Punkte und Flächen definiert, die symmetrisch zur Achse des Meißels angeordnet sind.

Die Druckschrift GB 707 021 A betrifft ein Verfahren zum Hartlöten einer Hartmetallspitze im Schlitz eines Gesteinsbohrers.

Die Druckschrift EP 1 865 144 A1 betrifft einen Hartstoffkopf für einen Drehschlagbohrer und einen damit bestückten Drehschlagbohrer zur Verwendung mit drehschlagenden Handwerkzeugmaschinen.

Demgegenüber liegt der Erfindung die Aufgabe zugrunde, einen Bohrer gemäß dem Oberbegriff von Anspruch 1 zu schaffen, der hinsichtlich der Präzision des Rundlaufs gerade auch bei größeren Bohrerdurchmessern verbessert ist, und zudem eine besonders gute Haltbarkeit hinsichtlich der Verankerung des Schneidkörpers aufweist.

Diese Aufgabe wird erfindungsgemäß durch Anspruch 1 gelöst. Vorteilhafte Weiterbildungen ergeben sich aus den Unteransprüchen.

Erfindungsgemäß ist es vorgesehen, dass der Lötspalt sich in radialer Richtung in seiner Breite ändert. Dies bedeutet, dass er an einer Stelle schmal ist, und zwar so schmal, dass dies für das Klemmen ausreicht, und an einer anderen Stelle ziemlich breit. Eine minimale Kerbung kann gegebenenfalls günstig sein, um die Klemmung herbeizuführen oder zu unterstützen.

Durch eine derartige Ausgestaltung lässt sich in überraschend einfacher Weise die erwünschte Klemmung und damit optimale Zentrierung maschinell erzeugen, ohne dass eine manuelle Handhabung wie die Erstellung einer Kerbe zur Bereitstellung einer Materialaufwerfung erforderlich wäre.

Bei Bohrern mit größerem Durchmesser ist es besonders günstig, wenn der Lötspalt sich nach außen hin radial aufweitet. Hierdurch ist er an seinem Außenumfang wesentlich breiter als bei Standardbohrern, typischerweise beispielsweise etwa ein Zehntel der Stärke des Schneidkörpers. Überraschend führt dies zu einer besonders guten Standzeit des Bohrers auch bei armiertem Gestein.

Wenn der Lötspalt nach außen breiter wird, ergibt sich der besondere Vorteil, dass die Spannungen, die in der Regel nach außen hin zunehmen, reduziert werden. Dies ermöglicht eine Kompensation der Winkelungenauigkeit der Schneide des Schneidkörpers bzw. Fertigungsungenauigkeiten beim Einbringen des Schlitzes.

Durch die Reduktion der erforderlichen Kerben bzw. deren vollständigen Wegfall werden jedenfalls die Spannungen insgesamt reduziert, was auch das Ausfallrisiko des Schneidkörpers und des Bohrkopfes reduziert.

Es versteht sich, dass in Schlagrichtung, also stirnseitig des Schneidkörpers, die Stärke des Lötspalts in an sich bekannter Weise möglichst gering ist, um eine möglichst hohe Schlagenergie von der antreibenden Werkzeugmaschine auf den Schneidkörper zu übertragen.

Diese Federwirkung des sternförmig aufgeweiteten Lötspalts kommt besonders bei Mehrschneidern, beispielsweise bei Vierschneidern zum Tragen.

Der erfindungsgemäße Bohrer ist kostengünstiger herzustellen, da der zusätzliche Aufwand für das ansonsten erforderliche Kerben des Bohrerkopfes an der Körperaufnahme entfällt.

Über die Breite des Bohrers betrachtet kann eine Körperaufnahme beispielsweise schwalbenschwanzförmig ausgebildet sein und eine entsprechende Ausgestaltung lässt sich leicht durch einen CAM-geführten Fräser realisieren.

Alternativ kann der konische Lotspalt durch einen konischen Verlauf der Hartmetallschneide erzeugt werden. Diese Lösung ist bevorzugt, da hierdurch mittels eines üblichen Scheibenfräsers die Körperaufnahme erzeugt werden kann, und zwar in einem Zuge.

Hierbei wird zweckmäßig der Fräser zunächst an der der Spanseite entsprechenden Seitenfläche der Körperaufnahme geführt, und die Körperaufnahme insofern dem Grunde nach hergestellt.

Die nochmalige Führung des Fräsers im geringen Winkel hierzu an der Seitenfläche, die der Schneidseite des Schneidkörpers entspricht, ergibt nur einen geringen Materialabtrag von höhstens wenigen Millimetern oder im Submillimeter Bereich. Die Oberflächenqualität dieser Schneidseiten-Seitenflächen ist daher besonders gut, und das Materialgefüge des Bohrerkopfes an dieser Stelle ist besonders gut verdichtet. Auch diese Erscheinung kommt der Standzeit des Bohrers zugute.

Die Vorteile einer derartigen Doppelführung des Fräsers für die Herstellung der Körperaufnahme ergeben sich besonders bei nach außen divergierendem Lötspalt, also dem sternförmigen Aufbau, wie er bei größeren Bohrern bevorzugt ist.

In vorteilhafter Ausgestaltung ist es vorgesehen, die Körperaufnahme für den Zentralkörper des Schneidkörpers, wie er bei Mehrschneidern in der Regel realisiert ist, durch einen separaten Fräser zu erzeugen, der zentral und koaxial zur Bohrerachse in den Bohrkopf eintaucht.

Besonders günstig ist eine symmetrische Ausgestaltung der Lötspalte auf der Spanseite beziehungsweise der Schneidseite der Schneidkörpers. Hierdurch ergibt sich eine besonders stabile und sichere Lagerung des Schneidkörpers, in Hinblick auf die gleichmäßige Verteilung des Lots in den Lötspalten.

Je nach Anwendungsfall kann es aber auch günstig sein, eine asymmetrische Verteilung dergestalt zu realisieren, dass der schneidseitige Lötspalt breiter als der spanseitige Lötspalt ist. Hierdurch ist der Schneidkörper härter in dem Bohrerkopf abgestützt, nachdem typischerweise das Lot nachgiebiger als der für den Bohrerkörper verwendete Stahl ist. Alternativ lässt sich auch die umgekehrte Ausgestaltung realisieren, um eine besonders drehweiche und elastische Lagerung des Schneidkörpers in der Körperaufnahme zu realisieren.

Erfindungsgemäß ist es vorgesehen, die Klemmung an der Nahtstelle zwischen Körperaufnahme und Schneidkörper gleichsam punktförmig je vorzusehen. Hierzu ist bevorzugt der Lötspalt zusätzlich nach rückwärts hin aufgeweitet. Die Klemmung erfolgt dann so elastisch wie möglich, nachdem die Klemmstelle dann von dem Nutengrund der Bohreraufnahme so weit wie möglich beabstandet ist.

In vorteilhafter Ausgestaltung ist es vorgesehen, dass der Schneidkörper Seitenflächen aufweist, und dass die Körperaufnahme quer über den Bohrer hinweg betrachtet gerade ausgebildet ist. Durch diese Ausgestaltung ist es möglich, mit einem Scheibenfräser in einem Zuge die Körperaufnahme herzustellen, wie bei den herkömmlichen Bohrern, die gerade Körperaufnahmen haben.

Der Schneidkörper ist typischerweise aus gesintertem Hartmetall, und es ist mit geringem Aufwand möglich, die Pressform in der gewünschten Weise anzupassen, also ihr eine etwas von den geraden Seitenflächen abweichende Form zu geben.

Auch durch diese Ausgestaltung kann der Lötspalt in radialer Richtung betrachtet sich in seiner Breite verändern, also beispielsweise am Außenumfang breiter werden, so dass sich die erfindungsgemäß günstige Federwirkung einstellt.

Weitere Vorteile, Einzelheiten und Merkmale ergeben sich aus der nachstehenden Beschreibung zweier Ausführungsbeispiele der Erfindung anhand der Zeichnungen.

Es zeigen:
- Fig. 1: eine schematische Stirnansicht eines erfindungsgemäßen Bohrers;
- Fig. 2: eine schematische Ansicht einer weiteren Ausführungsform eines nicht erfindungsgemäßen Bohrers.

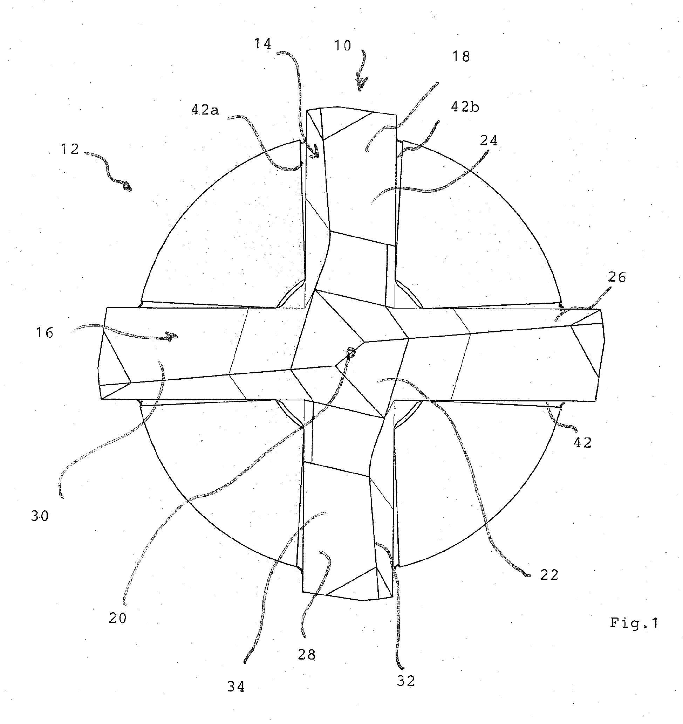

Der in Fig. 1 dargestellte Bohrer 10 weist einen Bohrerkopf 12 auf, in welchem Körperaufnahmen 14 und 16 für die Aufnahme eines Schneidkörpers 18 ausgebildet sind.

Der Begriff Schneidkörper sei hier nicht auf die flachen Hartmetallplatten von Zweischneidern beschränkt, sondern es seien auch die in der Regel sternförmigen Schneidkörper von Mehrschneidern mit einbezogen, also sämtliche Schneidkörper.

In an sich bekannter Weise erstreckt sich der Bohrerkopf 12 kreissymmetrisch zu einer Bohrerachse 20. Von da ausgehend und diese umgebend erstreckt sich ein Zentralkörper 22 des Schneidkörpers 18, und Außenkörper 24, 26, 28 und 30 erstrecken sich in wie bei Vierschneidern an sich bekannter Weise von dem Zentralkörper 22 sternförmig nach außen.

In ebenfalls an sich bekannter Weise weist jeder Außenkörper 24 bis 30 eine Schneidkante 32 auf, die eine Spanfläche 34 von einer Schneidfläche 32 trennt.

In an sich bekannter Weise besteht der Schneidkörper 18 aus gesintertem Hartmetall, und der Bohrerkopf 12 im Übrigen aus Stahl.

In ebenfalls an sich bekannter Weise ist der Schneidkörper 18 in den Körperausnehmungen 14 mit Lot 40 gelagert. Das Lot 40 verläuft in Lötspalten 42, die erfindungsgemäß besonders gestaltet sind.

In dem dargestellten Ausführungsbeispiel weisen die Lötspalte 42 am Außenumfang des Bohrers eine größere Breite - in tangentialer Richtung betrachtet - als Innen auf. Im Bereich des Zentralkörpers 22 ist die Breite des Lötspalts 42 je auf null oder nahezu auf null reduziert. Dort besteht insofern sogar eine Klemmwirkung zwischen des Schneidkörpers 18 und jeweiligen Körperaufnahme 14 und 16.

Insofern divergieren die Lötspalte 42 nach außen hin, in dem dargestellten Ausführungsbeispiel alle acht Lötspalte 42 gleichförmig.

Die Drehmomente des Bohrers werden typischerweise hauptsächlich am Außenumfang des Bohrers übertragen. Wenn die Schneidkante 22 eines Außenkörpers 24 auf eine Armierung trifft, wird der spanseitige Lötspalt 42b auf Druck belastet, während der schneidseitige Lötspalt 42a entlastet wird. Das verbindende Lot ist vergleichsweise elastisch und weicher als Stahl, so dass die auftreffende Zerstörungsenergie, die durch ein Armierungseisen, aber auch durch einen Stein eingeleitet werden könnte, vergleichmäßigt und abgemildert wird.

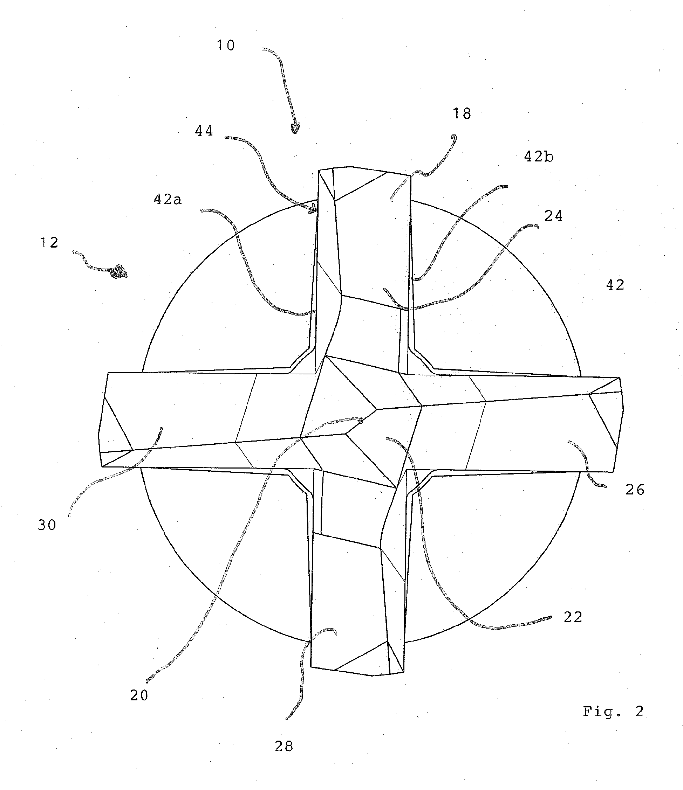

Ein demgegenüber modifizierter Bohrer ist in Fig. 2 dargestellt. Bei dieser Ausführungsform werden gleiche Bezugszeichen für die gleichen Teile verwendet und bedürfen keiner erneuten Erläuterung.

Im Unterschied zu der Ausführungsform gemäß Fig. 1 konvergieren die Lötspalte 42 bei der Ausführungsform gemäß Fig. 2 von innen nach außen. Die Klemmbereiche 44 sind insofern je am radial äußeren Umfang des Bohrerkopfes 12 vorgesehen. Gerade bei kleinen Durchmessern, mit einem entsprechend geringem Abstand zwischen Bohrerachse 20 und Außendurchmesser des Bohrerkopfes 12, bietet diese Ausgestaltung insofern einen größeren Abstand für die Bereitsstellung der Klemmwirkung. Bei dieser Lösung ist zusätzlich der Lötspalt 42 von hinten nach vorne, also zu Bohrerspitze hin verjüngend, ausgebildet, was der Verbesserung der Klemmwirkung zusätzlich zugute kommt.

Während die hier dargestellten Ausführungsbeispiele lineare Querschnittsänderungen in radialer Richtung zeigen, also eine gleichmäßige Zunahme der Breite des Lötspalts in radialer Richtung einwärts oder auswärts, oder mindestens abschnittsweise stetige Änderung der Breite des Lötspalts, versteht es sich, dass in einer modifizierten Ausgestaltung auch nicht lineare Änderungen des Querschnitts in radialer Richtung betrachtet hier abgedeckt sein sollen, also beispielsweise Stufen oder Bögen des Lötspalts.

## Patentansprüche

1. Bohrer mit einem Schneidkörper (18) aus Hartmetall, durch welchen hindurch sich eine Bohrerachse (20) erstreckt und welcher über ein Lot (40) in einer Körperaufnahme fest verankert ist, wobei zwischen dem Schneidkörper (18) und der Körperaufnahme ein Lötspalt ausgebildet ist, der sich von der Bohrerachse (20) ausgehend in radialer Richtung in seinem Querschnitt ändert,
wobei der Lötspalt (42) am Außenumfang des Bohrers (10) eine Breite von mehr als mindestens dem Doppelten einer inneren Stelle des Lötspalts (42) aufweist, und wobei der Lötspalt (42) an einer Engstelle zwischen 0,01 und 0,1 mm breit ist,
**dadurch gekennzeichnet, dass**
der Lötspalt an einer Breitstelle zwischen 0,1 und 0,5 mm breit ist und eine Klemmung an der Nahtstelle zwischen der Körperaufnahme und dem Schneidkörper (18) gleichsam je punktförmig vorgesehen ist und der Schneidkörper (18) als Mehrschneidplatte ausgebildet ist.

2. Bohrer nach Anspruch 1, **dadurch gekennzeichnet, dass** der Schneidkörper (18) einstückig ausgebildet ist und von einem Zentralkörper (22) ausgehende Außenkörper (24, 16, 28 und 30) aufweist, die sich über den Umfang des Bohrers (10) im Übrigen hinaus erstrecken.

3. Bohrer nach einem der vorgehenden Ansprüche, **dadurch gekennzeichnet, dass** mindestens ein Außenkörper (24, 16, 28 und 30) an einer radial außerhalb des Zentralkörpers (22) liegenden Stelle in Punktanlage und/oder Linienanlage mit der Körperaufnahme ist und an mindestens einer radial woanders angeordneten Stelle ein Spiel gegenüber der Körperaufnahme hat, das mit Lot (40) ausgefüllt ist.

4. Bohrer nach einem der vorhergehenden Ansprüche, **dadurch gekennzeichnet, dass** jeder Außenkörper (24, 16, 28 und 30) des Schneidkörpers (18)zueinander parallele Außenflächen und die Körperaufnahme je schräg zu der Außenfläche verlaufende Seitenflächen aufweist.

5. Bohrer nach einem der vorgehenden Ansprüche, **dadurch gekennzeichnet, dass** die Körperaufnahme (14, 16) einen geraden Verlauf, in Richtung quer über den Bohrer betrachtet, hat und dass der Schneidkörper (18), ebenfalls über den Verlauf des Bohrers betrachtet, konvergierende oder divergierende Seitenflächen aufweist.

6. Bohrer nach einem der Ansprüche 3 oder 4, **dadurch gekennzeichnet, dass** der Lötspalt (42) von einem Zentralkörper (22) des Schneidkörpers (18) ausgehend zum Außenumfang des Bohrers (10) hin divergiert.

7. Bohrer nach einem der Ansprüche 1 bis 5, **dadurch gekennzeichnet, dass** der Lötspalt (42) über die Höhe der Körperaufnahme, parallel zur Bohrerachse (20) betrachtet, an der radial gleichen Stelle sich in seiner Breite ändert.

8. Bohrer nach einem der vorhergehenden Ansprüche, **dadurch gekennzeichnet, dass** der Schneidkörper kerbfrei durch eine Klemmstelle, die sich an einer radial vorgegebenen Stelle der Außenkörper (24, 16, 28 und 30) des Schneidkörpers (18) erstreckt, in der Körperaufnahme klemmt und durch Lot (40) in an sich bekannter Weise fixiert ist.

9. Bohrer nach einem der vorhergehenden Ansprüche, **dadurch gekennzeichnet, dass** die Körperaufnahme eine Kerbung aufweist, über welche der Gleitkörper in der Körperaufnahme auch ohne Lot klemmend gehalten ist.

10. Bohrer nach einem der vorhergehenden Ansprüche, **dadurch gekennzeichnet, dass** die Körperaufnahme (14, 16) mit einem Scheibenfräser hergestellt ist und hinterschneidungsfrei ausgebildet ist.

## Claims

1. A drill comprising a cutting body (18) made of hard metal, through which a drill axis (20) extends, and which is firmly anchored in a body mount via a solder (40), wherein between the cutting body (18) and the body mount a soldering gap is configured, which changes in cross-section starting from the drill axis (20) in the radial direction, wherein the soldering gap (42) on the outer circumference of the drill (10) has a width of more than at least twice of an inner point of the soldering gap (42), and wherein the soldering gap (42) has a width of between 0.01 and 0.1 mm at a narrow point,
**characterised in that** the soldering gap has a width of between 0.1 and 0.5 mm at a wide point and a clamping is provided at the interface between the body mount and the cutting body (18) in the form of a point as it were in each case and the cutting body (18) is configured as a multiple cutting insert.

2. The drill according to claim 1, **characterised in that** the cutting body (18) is configured in one piece and has outer bodies (24, 16, 28 and 30) which extend from a central body (22) and over the circumference of the remaining drill (10).

3. The drill according to one of the preceding claims, **characterised in that** at least one outer body (24, 16, 28 and 30) is in point contact and/or line contact with the body mount at a point which is radially to the outside of the central body (22) and has a clearance in relation to the body mount that is filled with solder (40) at least at one point arranged radially elsewhere.

4. The drill according to one of the preceding claims, **characterised in that** each outer body (24, 16, 28 and 30) of the cutting body (18) has mutually parallel outer surfaces and the body mount has side surfaces respectively extending obliquely to the outer surface.

5. The drill according to one of the preceding claims, **characterised in that** the body mount (14, 16) has a straight course, viewed in the direction transversely over the drill, and **in that** the cutting body (18) has converging or diverging lateral surfaces, also viewed over the course of the drill.

6. The drill according to one of claims 3 or 4, **characterised in that** the soldering gap (42) diverges from a central body (22) of the cutting body (18) towards the outer circumference of the drill (10).

7. The drill according to one of claims 1 to 5, **characterised in that** the soldering gap (42) changes in width over the height of the body mount, viewed parallel to the drill axis (20), at the same radial point.

8. The drill according to one of the preceding claims, **characterised in that** the cutting body is clamped notch-free in the body mount due to a clamping point which extends at a radially predetermined point of the outer bodies (24, 16, 28 and 30) of the cutting body (18), and is fixed by solder (40) in a way known per se.

9. The drill according to one of the preceding claims, **characterised in that** the body mount has a notch by means of which the sliding body is held clamped in the body mount even without solder.

10. The drill according to one of the preceding claims, **characterised in that** the body mount (14, 16) is produced with a disc cutter and is configured to be free of undercuts.

## Revendications

1. Foret ayant un corps de coupe (18) en carbure, à travers lequel s'étend un axe de foret (20) et qui est solidement ancré dans un logement de corps par l'intermédiaire d'une brasure (40), où un interstice de brasage est formé entre le corps de coupe (18) et le logement de corps, dont la section transversale varie par rapport à l'axe de perçage (20) dans une direction radiale, où l'interstice de brasage (42) sur la circonférence extérieure du foret (10) présente une largeur d'au moins deux fois celle d'un point intérieur de l'espace de soudure (42), et où l'interstice de brasage (42) a une largeur comprise entre 0,01 et 0,1 mm en un point étroit, **caractérisé en ce que** l'interstice de brasage a une largeur comprise entre 0,1 et 0,5 mm en un point large et **en ce qu'**un serrage est prévu au niveau du point de jonction entre le logement du corps et le corps de coupe (18), pour ainsi dire par points et **en ce que** le corps de coupe (18) est conçu comme une plaque multi-coupe.

2. Foret selon la revendication 1, **caractérisé en ce que** le corps de coupe (18) est réalisé en une seule pièce et présente des corps extérieurs (24, 16, 28 et 30) s'étendant à partir d'un corps central (22) qui s'étendent par ailleurs au-delà de la circonférence du foret (10).

3. Foret selon l'une des revendications précédentes, **caractérisé en ce qu'**au moins un corps extérieur (24, 16, 28 et 30) est en contact ponctuel et/ou linéaire avec le logement du corps à un endroit situé radialement à l'extérieur du corps central (22) et présente un jeu par rapport au logement de corps à au moins un endroit situé radialement ailleurs, qui est rempli de soudure (40) .

4. Foret selon l'une des revendications précédentes, **caractérisé en ce que** chaque corps extérieur (24, 16, 28 et 30) du corps de coupe (18) présente des surfaces extérieures parallèles les unes aux autres et que le support du corps présente des surfaces latérales respectives s'étendant obliquement par rapport à la surface extérieure.

5. Foret selon l'une des revendications précédentes, **caractérisé en ce que** le logement de corps (14, 16) présente un tracé rectiligne vu dans le sens transversal au foret et **en ce que** le corps de coupe (18 présente des faces latérales convergentes ou divergentes), également considérées sur le tracé du foret.

6. Foret selon l'une des revendications 3 ou 4, **caractérisé en ce que** l'interstice de brasage (42) diverge à partir d'un corps central (22) du corps de coupe (18) vers la circonférence extérieure du foret (10).

7. Foret selon l'une des revendications 1 à 5, **caractérisé en ce que** l'interstice de brasage (42) varie en largeur sur la hauteur du logement du corps vu parallèlement à l'axe de perçage (20) au même endroit radial.

8. Foret selon l'une des revendications précédentes, **caractérisé en ce que** le corps de coupe est serré dans le support de corps sans entaille par un point de serrage qui s'étend à un endroit radialement prédéfini des corps extérieurs (24, 16, 28 et 30) du corps de coupe (18) et est fixé par de la brasure (40) de manière connue en soi.

9. Foret selon l'une des revendications précédentes, **caractérisé en ce que** le support de corps présente une encoche par laquelle le corps coulissant dans le support de corps est maintenu serré même sans brasure.

10. Foret selon l'une des revendications précédentes, **caractérisé en ce que** le logement de corps (14, 16) est fabriqué avec une fraise à disque et est conçu sans contre-dépouille.
